# EUROPÄISCHE PATENTSCHRIFT

(11) **EP 0 555 876 B1**
(45) Veröffentlichungstag und Bekanntmachung des Hinweises auf die Patenterteilung: **08.05.1996**
(21) Anmeldenummer: 93102274.3
(22) Anmeldetag: 12.02.1993
(51) Int. Cl.: G01G 7/02, G01G 21/24

(54) **Kraftmessvorrichtung, insbesondere Waage, mit elektromagnetischem Zeiger**
Force measuring device, in particular a scale, with electromagnetic pointer
Dispositif pour mesurer la force, en particulier une balance, avec aiguille électromagnétique

(30) Priorität: 14.02.1992 DE 4204480
(43) Veröffentlichungstag der Anmeldung: 18.08.1993
(73) Patentinhaber: Mettler-Toledo (Albstadt) GmbH, D-72458 Albstadt (DE)
(72) Erfinder: Ast, Adolf, W-7475 Messstetten 1 (DE); Enzmann, Erwin, W-7475 Messstetten 1 (DE); Holike, Walter, W-7465 Geislingen 1 (DE)
(74) Vertreter: Patentanwälte Leinweber & Zimmermann

(56) Entgegenhaltungen:
- EP-A- 0 291 258
- EP-A- 0 393 323
- EP-A- 0 518 202
- DE-A- 3 218 943
- DE-A- 3 243 350
- PATENT ABSTRACTS OF JAPAN vol. 14, no. 349 (P-1084)(4292) 27. Juli 1990 & JP-A-21 24 433

## Beschreibung

Die Erfindung bezieht sich auf eine Kraftmeßvorrichtung, insbesondere Waage, mit einem relativ zu einem feststehenden Teil in der Richtung der zu messenden Kraft elastisch auslenkbar geführten Kraftaufnehmer und mit einer magnetischen Kompensationseinrichtung, die eine Magnetanordnung, eine in dem von der Magnetanordnung erzeugten Magnetfeld angeordnete Kompensationsspule, einen relativ zu dem feststehenden Teil elastisch gelagerten starren Hebel, durch dessen einen Hebelarm die Kompensationsspule abgestützt ist, einen eine vorgegebene Relativlage des Hebels in der Kraftmeßvorrichtung überwachenden Lagegeber und eine den Kompensationsstrom durch die Kompensationsspule in Abhängigkeit von dem Ausgangssignal des Lagegebers auf eine Einhaltung der vorgegebenen Relativlage einstellende und aus dem eingestellten Kompensationsstrom einen Meßwert für die zu messende Kraft bildende elektrische Einrichtung aufweist.

Das Meßprinzip derartiger Kraftmeßvorrichtungen beruht darauf, daß die von der zu messenden Kraft, beispielsweise der Gewichtskraft eines zu wiegenden Gegenstandes, hervorgerufene elastische Auslenkung des Kraftaufnehmers proportional zu der zu messenden Kraft ist. Zur Bildung eines die zu messende Kraft darstellenden Wertes, beispielsweise eines die zu messende Kraft in einem bestimmten Maßsystem wiedergebenden Digitalwertes, ist also die Erfassung der elastischen Auslenkung des Kraftaufnehmers erforderlich.

Bei einer bekannten Kraftmeßvorrichtung (DE-OS 32 18 943) erfolgt die Erfassung der Auslenkung des Kraftaufnehmers mit Hilfe der elektromagnetischen Kompensationseinrichtung, durch die der an seinem einen Hebelarm die Kompensationsspule tragende Hebel entgegen seiner elastischen Lagerkraft der elastischen Auslenkung des Kraftaufnehmers nachgeführt wird und aus der Größe des erforderlichen Kompensationsstromes der die zu messende Kraft darstellende Meßwert gebildet wird. Zu diesem Zweck ist die Lagerstelle des Hebels an dem feststehenden Teil der Kraftmeßvorrichtung in der Form eines Biegelagers ausgebildet, durch das der Hebel in seiner Drehrichtung elastisch gelagert ist. Der dem die Kompensationsspule tragenden Hebelarm entgegengesetzte andere Hebelarm des Hebels trägt das eine Element eines durch ein Elementepaar gebildeten Lagegebers, dessen anderes Element an dem Kraftaufnehmer angeordnet ist, wodurch der Lagegeber eine Tendenz zur Lageabweichung zwischen dem das eine Element tragenden Hebelarm und dem in Gegenüberstellung dazu das andere Element tragenden Lastaufnehmer anzeigt und durch sein Ausgangssignal mittels der elektrischen Einrichtung den Kompensationsstrom durch die Kompensationsspule derart einregelt, daß die Relativlage zwischen dem Hebel und dem Lastaufnehmer bei dessen elastischer Auslegung beibehalten bleibt. Das dabei an dem der Lagerung des Hebels dienenden Biegelager auftretende Drehmoment, das zu der elastischen Auslenkung des Kraftaufnehmers proportional ist, wird somit bei dieser Lageregelung durch die Kompensationsspule kompensiert, aus deren Kompensationsstrom folglich der die zu messende Kraft darstellende Meßwert gebildet werden kann.

Allerdings tritt dabei die Schwierigkeit auf, daß sich infolge der mit der Nachführung des Hebels verbundenen Hebeldrehung die Kompensationsspule relativ zu dem das Magnetfeld erzeugenden, an dem feststehenden Teil angeordneten Permanentmagneten bewegt und wegen der sich dadurch ändernden Relativlage zwischen dem Permanentmagneten und der Kompensationsspule Inhomogenitäten des Magnetfeldes das Meßergebnis beeinflussen. Um hierdurch hervorgerufene Meßfehler klein zu halten, sind daher hohe Anforderungen an die Homogenität des Magnetfeldes über den gesamten Bereich der möglichen Stellungen der Kompensationsspule relativ zu dem Permanentmagneten zu stellen, so daß der bauliche Aufwand verhältnismäßig groß ist. Zur Meidung dieser mit der relativen Lageveränderung zwischen der Kompensationsspule und dem Permanentmagneten verbundenen Schwierigkeit ist daher in der DE-OS 32 18 943 auch noch eine alternative Ausführungsform angegeben, bei der die Kompensationsspule mittels einer elastischen Parallelführung an dem feststehenden Teil in der Richtung der zu messenden Kraft geführt und die das Magnetfeld erzeugende Permanentanordnung an dem beweglichen Kraftaufnehmer festgelegt ist. Auch diese Anordnung erfordert einen verhältnismäßig hohen Bauaufwand. Außerdem wirkt dabei die zwischen der Kompensationsspule und dem das Magnetfeld erzeugenden Permanentmagneten bestehende Reaktionskraft auf die an dem Kraftaufnehmer angreifende, zu messende Kraft in unerwünschter Weise zurück. Da bei dieser Anordnung die Auslenkung des Lagegebers unmittelbar dem nur kleinen Weg des Lastaufnehmers entspricht und keine Wegvergrößerung durch Hebelübersetzung auftritt, müssen zur Erzielung einer hohen Meßgenauigkeit außerordentlich hohe Anforderungen an die Ausbildung des Lagegebers gestellt werden.

Bekannt sind auch Kraftmeßvorrichtungen anderer Art, bei denen an den gegenüber einem feststehenden Teil parallel geführten Kraftaufnehmer ein an dem feststehenden Teil abgestützter starrer Hebel mit seinem einen Hebelarm angekoppelt ist, während der andere Hebelarm die Kompensationsspule einer elektromagnetischen Kraftkompensationseinrichtung trägt. Der Kompensationsstrom wird dabei derart eingeregelt, daß von der Kompensationseinrichtung die gesamte auf den Kraftaufnehmer einwirkende Kraft im Gleichgewicht gehalten wird. Diese Kraftmeßvorrichtungen, bei denen der Kraftaufnehmer also keine endliche Auslenkung gegenüber dem feststehenden Teil erfährt, sondern von der Kompensationseinrichtung stets in seiner Nullage gehalten wird, erfordern jedoch bei großen zu messenden Kräften eine entsprechend große Kompensationskraft in der elektromagnetischen Kompensationseinrichtung und/oder ein starkes Übersetzungsverhältnis des oder der Kraftübertragungshebel. Dann stellt sich jedoch das Problem einer verhältnismäßig großen elektrischen Verlustleistung in der Kompensationseinrichtung bzw. einer mechanisch aufwendigen Ausgestaltung des oder der Kraftübertragungshebel.

Der Erfindung liegt die Aufgabe zugrunde, eine Kraftmeßvorrichtung der eingangs genannten Art dahingehend auszubilden, daß sie bei einem einfachen Aufbau eine hohe Meßgenauigkeit aufweist.

Erfindungsgemäß wird diese Aufgabe dadurch gelöst, daß der andere Hebelarm des Hebels an den Kraftaufnehmer mechanisch angekoppelt ist, der elastische eg der Lagerstelle des Hebels sich in der Auslenkrichtung des Kraftaufnehmers erstreckt, und der Lagegeber die Relativlage zwischen der Magnetanordnung und der Kompensationsspule überwacht.

Bei der Erfindung wird also die durch die zu messende Kraft an dem Kraftaufnehmer hervorgerufene elastische Auslenkung auf den mit dem betreffenden Hebelarm mechanisch an den Kraftaufnehmer angekoppelten Hebel übertragen. Doch wird die elastische Auslenkung des Kraftaufnehmers dabei nicht lediglich in eine ihr entsprechende Drehung des Hebels um seine Lagerstelle umgesetzt, weil der Lagegeber die Relativlage zwischen der Kompensationsspule und der Magnetanordnung überwacht und dadurch der betreffende Hebelarm in seinem die Kompensationsspule tragenden Bereich relativ zu der Magnetanordnung in seiner Lage annähernd festgehalten wird. Folglich bedingt die elastische Auslenkung des Kraftaufnehmers eine entsprechende elastische Auslenkung der Lagerstelle des Hebels längs ihres sich parallel zur Auslenkrichtung des Kraftaufnehmers erstreckenden elastischen Weges, so daß die von der Kompensationseinrichtung aufzubringende Kompensationskraft einerseits durch das Verhältnis zwischen den beiden Hebelarmen und andererseits durch das Verhältnis der die elastische Auslenkung des Kraftaufnehmers und die elastische Auslenkung der Lagerstelle des Hebels bestimmenden Elastizitätskonstanten festgelegt ist. Wegen des für die Lagerstelle des Hebels vorgesehenen elastischen Weges ist es also möglich, die Relativlage zwischen der Kompensationsspule und der Magnetanordnung konstant zu halten, so daß keine Fehler durch Inhomogenitäten des Magnetfeldes eingeführt werden. Neben dieses Ausschlusses von Inhomogenitätsfehlern zeichnet sich die erfindungsgemäße Kraftmeßvorrichtung durch ihre bauliche Einfachheit aus. Insbesondere können die Magnetanordnung und der Lagegeber an dem feststehenden Teil angeordnet sein. Ferner besteht hinsichtlich der Anordnung des Hebels in der Kraftmeßvorrichtung ein breiter Gestaltungsspielraum, so lange nur der elastische Weg der Lagerstelle des Hebels gewährleistet ist. So kann der Hebel beispielsweise sowohl einseitig als auch zweiseitig ausgebildet sein, d. h. eine solche Geometrie vorliegen, bei der sich die Hebelarme von der Lagerstelle aus in derselben Richtung oder bezüglich der Lagerstelle in zueinander entgegengesetzten Richtungen erstrecken.

In einer zweckmäßigen Ausführungsform ist vorgesehen, daß das Übersetzungsverhältnis zwischen dem die Kompensationsspule abstützenden Hebelarm und dem an den Lastaufnehmer angekoppelten Hebelarm größer als 1 ist. Unter dieser Voraussetzung entspricht den elastischen Wegen des Kraftaufnehmers und der Lagerstelle ein durch die Übersetzung vergrößerter Weg des die Kompensationsspule abstützenden Hebelarms im Bereich des Lagegebers, so daß an die Genauigkeit des Lagegebers entsprechend geringere Anforderungen gestellt werden können.

Gemäß einer bevorzugten Ausführungsform der Erfindung ist ferner vorgesehen, daß das Verhältnis zwischen der elastischen Kraft der Führung des Kraftaufnehmers und der elastischen Kraft der Abstützung der Lagerstelle des Hebels groß gegen 1 ist. Unter dieser Bedingung ist die von der Kompensationseinrichtung aufzubringende Kompensationskraft praktisch nur durch das Maß der elastischen Auslenkung und den für den elastischen Weg der Lagerstelle des Hebels geltenden Elastizitätskoeffizienten bestimmt, so daß die gegebenenfalls großen zu messenden Kräfte allein von der elastischen Führung des Kraftaufnehmers abgestützt werden.

Eine in baulicher Hinsicht besonders vorteilhafte Ausführungsform besteht darin, daß der Kraftaufnehmer mit dem feststehenden Teil durch querelastische Lenker in der Form einer Parallelogrammführung verbunden ist, in der sich die Lenker längs zwei gegenüberliegenden Parallelogrammseiten und der Kraftaufnehmer bzw. das feststehende Teil längs der zwei anderen gegenüberliegenden Parallelogrammseiten erstrecken, und daß der Hebel an einem sich in seiner Längsrichtung von dem feststehenden Teil aus zwischen den die beiden Parallelogrammseiten bildenden Lenkern erstreckenden querelastischen Teil abgestützt ist. Durch die Verwirklichung des für die Lagerstelle des Hebels erforderlichen elastischen Weges mittels des die Lagerstelle, gegebenenfalls unter Zwischenschaltung einer Zug- oder einer Druckkoppel, abstützenden querelastischen Teils läßt sich die Erfindung besonders einfach an den im übrigen mit einer herkömmlichen Parallelogrammführung aufgebauten Kraftaufnehmern ausführen, deren bauliche Einfachheit und Robustheit sich in der Praxis bewährt hat.

Insbesondere besteht eine in diesem Zusammenhang zweckmäßige Ausführungsform darin, daß die Elastizität der Lenker auf ihre an die Parallelogrammecken angrenzenden Bereiche und die Elastizität des querelastischen Teils auf seinen an das feststehende Teil angrenzenden Bereich lokalisiert ist. Die Verwirklichung der erforderlichen Elastizitätseigenschaften durch derartige örtlich konzentrierte Biegestellen läßt insbesondere eine genaue Bearbeitung dieser Biegestellen zu, so daß die elastischen Eigenschaften genau kontrolliert werden können.

Schließlich ist die erfindungsgemäße Kraftmeßvorrichtung mit besonderem Vorteil derart ausgebildet, daß der Kraftaufnehmer, das feststehende Teil, die Lenker, der Hebel und das querelastische Teil von Materialbereichen eines einstückigen Materialblocks gebildet sind, die durch von Ausnehmungen des Materialblocks gebildete materialfreie Bereiche voneinander getrennt sind und nur an lokalisierten Materialbereichen des Materialblocks miteinander zusammenhängen.

Bei dieser einstückigen Ausführung wesentlicher Teile der Kraftmeßvorrichtung entfallen die sonst notwendigen Montage- und Justierarbeiten. Die Materialbereiche des Materialblocks, an denen die einzelnen Teile zusammenhängen, bilden gleichzeitig die auf die erforderlichen Elastizitätseigenschaften eingestellten Biegestellen bzw. Koppeln. Insbesondere kann durch die Wahl der Materialstärken in den Bereichen, an denen die Lenker mit dem Kraftaufnehmer bzw. dem feststehenden Teil zusammenhängen und das querelastische Teil mit dem feststehenden Teil zusammenhängt, der bei der Auslenkung des Kraftaufnehmers herrschende Elastizitätskoeffizient sowie der bei der elastischen Auslenkung der Lagerstelle des Hebels herrschende Elastizitätskoeffizient auf die jeweils gewünschten Werte eingestellt werden.

Weitere Merkmale, Einzelheiten und Vorteile der Erfindung ergeben sich aus der folgenden Beschreibung und der Zeichnung, auf die bezüglich einer erfindungswesentlichen Offenbarung aller zunächst nicht erwähnten Einzelheiten ausdrücklich hingewiesen wird. Hierin zeigen:
- Fig. 1: einen schematischen Aufbau einer Ausführungsform der erfindungsgemäßen Kraftmeßvorrichtung, und
- Fig. 2: eine dem schematischen Aufbau von Fig. 1 entsprechende einstückige Ausführungsform.

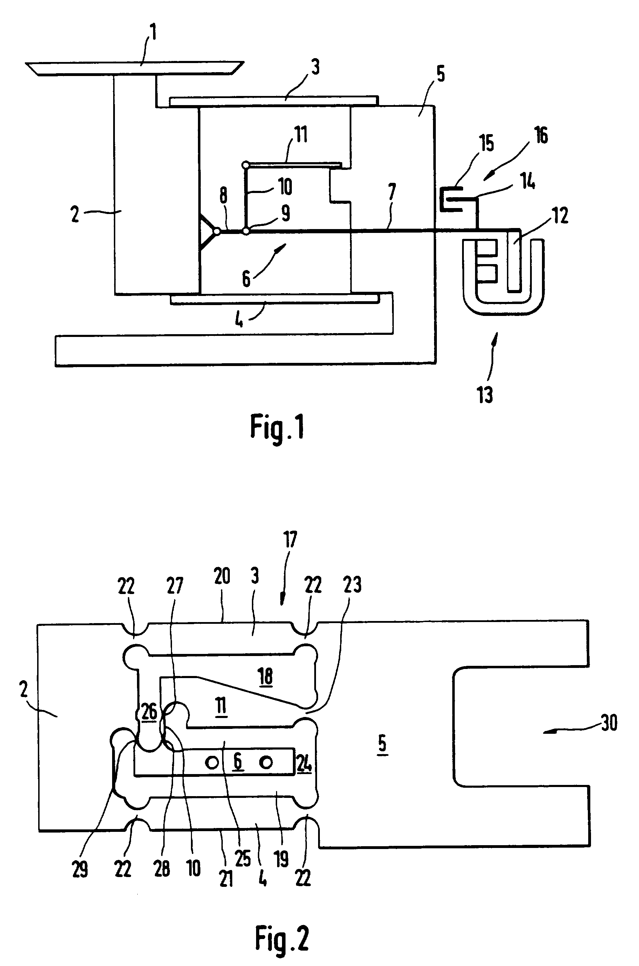

Gemäß Fig. 1 weist eine dort dargestellte Waage einen eine Waagschale 1 zur Aufnahme des Wiegegutes tragenden Kraftaufnehmer 2 auf, der in der vertikalen Richtung der von dem Wiegegut ausgeübten Gewichtskraft mittels eines Paares sich in einem Abstand zueinander horizontal erstreckender Lenker 3, 4 an einem einen Ständer für die Waage bildenden feststehenden Teil 5 auslenkbar geführt ist. Infolge einer Querelastizität der in ihrer horizontalen Längsrichtung steifen Lenker 3, 4 legt der Kraftaufnehmer 2 unter dem Einfluß der auf ihn einwirkenden Gewichtskraft einen zu dieser proportionalen elastischen Weg zurück, dessen Größe durch die Elastizitätskonstante der mittels der Lenker 3, 4 gebildeten Parallelführung bestimmt ist.

Ein in Fig. 1 nur schematisch dargestellter, zweiseitiger, starrer Hebel 6 ist an seiner zwischen seinem einen Hebelarm 7 und seinem anderen Hebelarm 8 gelegenen Lagerstelle 9 gelenkig an einer sich vertikal erstreckenden Zugkoppel 10 abgestützt, die an ihrem der Lagerstelle 9 entgegengesetzten anderen Ende an einem sich vom feststehenden Teil 5 aus zwischen dem Hebel 6 und dem oberen Lenker 3 horizontal erstreckenden querelastischen Teil 11 angelenkt ist. Statt dieser elastischen Aufhängung des Hebels 6 an dem querelastischen Teil 11 mittels der Zugkoppel 10 könnte der Hebel 6 alternativ auf einer Druckkoppel abgestützt sein, die sich vertikal zwischen der Lagerstelle 9 und dem in diesem Fall zwischen dem Hebel 6 und dem unteren Lenker 4 angeordneten querelastischen Teil 11 erstreckt.

An dem der Lagerstelle 9 entgegengesetzten, über das feststehende Teil 5 hinausragenden freien Ende des einen Hebelarms 7 ist eine Kompensationsspule 12 einer elektromagnetischen Kompensationseinrichtung angeordnet, deren Magnetfeld von einer relativ zum feststehenden Teil 5 feststehenden Magnetanordnung 13 erzeugt wird. Ferner ist in der Nähe des die Kompensationsspule 12 tragenden freien Endes die eine Fühlerhälfte 14 eines mit seiner anderen Fühlerhälfte 15 an dem feststehenden Teil 5 festgelegten Lagegebers 16 angeordnet, so daß der Lagegeber 16 die Einhaltung einer gleichbleibenden Relativlage zwischen der Kompensationsspule 12 und der Magnetanordnung 13 überwacht. Das der Lagerstelle 9 entgegengesetzte Ende des anderen Hebelarms 8 ist mit dem Kraftaufnehmer 2 gelenkig verbunden.

Das Ausgangssignal des Lagegebers 16 dient als Regeleingangssignal für eine in der Zeichnung nicht dargestellte elektrische Einrichtung, die in Abhängigkeit von dem Ausgangssignal des Lagegebers 16 die Kompensationsspule 12 mit einem derart eingestellten Kompensationsstrom beschickt, daß infolge der Kraftwirkung zwischen der Kompensationsspule 12 und dem von der Magnetanordnung 13 hervorgerufenen Magnetfeld die von dem Lagegeber 16 überwachte Relativlage auch bei einer elastischen Auslenkung des Kraftaufnehmers 2 unter dem Einfluß einer zu wiegenden Last beibehalten wird. Die von dem Kompensationsstrom an der Spule 12 hervorgerufene Kompensationskraft entspricht also derjenigen Kraft, die infolge einer Auslenkung des Kraftaufnehmers 2 durch die Gewichtskraft einer zu wiegenden Last und die damit verbundene elastische Auslenkung der Lagerstelle 9 entgegen der Federkraft des querelastischen Teils 11 auf das die Kompensationsspule 12 tragende Ende des einen Hebelarms 7 übertragen wird. Insbesondere kann die Elastizitätskonstante des querelastischen Teils 11 im Vergleich zur Elastizitätskonstante der Lenkel 3, 4 sehr klein gewählt werden, so daß die Gewichtskraft der zu wiegenden Last praktisch vollständig von den elastischen Gegenkräften der Lenker 3, 4 aufgenommen wird, während der Hebel 6 praktisch nur die durch die elastische Auslenkung der Lagerstelle 9 verursachte elastische Gegenkraft des querelastischen Teils 11 auf die Kompensationsspule 12 überträgt. Auch bei hohen Gewichtskräften können daher die von der Kompensationsspule 12 aufzubringenden Gegenkräfte durch geeignete Bemessung des querelastischen Teils 11 klein gehalten werden.

Der Kompensationsstrom durch die Spule 12 ist zu der Gewichtskraft der auf die Waagschale 1 aufgelegten Last proportional, wobei die Proportionalitätskonstante sowohl durch das Verhältnis zwischen den von den Lenkern 3, 4 und dem querelastischen Teil 11 aufgebrachten elastischen Kräften als auch durch das Übersetzungsverhältnis zwischen den Hebelarmen 7, 8 bestimmt ist. Aus dem Kompensationsstrom kann daher mittels der elektrischen Einrichtung ein Meßwert für die zu wiegende Kraft in einem gewünschten Maßsystem gebildet werden, indem beispielsweise der von dem Kompensationsstrom an einem Meßwiderstand hervorgerufene Spannungsabfall erfaßt und in einem Analog-Digitalwandler digitalisiert wird.

Während in der schematischen Darstellung von Fig. 1 die der Kraftaufnahme und Kraftübertragung zur Kompensationsspule 12 dienenden Teile als getrennte und zur Bildung der Waage zusammenmontierte Einzelteile dargestellt sind, ist es in der Praxis gemäß der Darstellung von Fig. 2 besonders vorteilhaft, diese Teile einstückig zusammenhängend als Materialbereiche eines einzigen Materialblocks 17 auszubilden. Zu diesem Zweck sind in dem Materialblock 17 materialfreie Bereiche derart herausgearbeitet, daß sie die einzelnen Teile gegeneinander abgrenzen. So begrenzen materialfreie Bereiche 18 und 19 an ihren jeweils zu den beiden zueinander parallelen Außenkanten 20, 21 des im wesentlichen rechteckigen Materialblock 17 weisenden und sich parallel zu den Außenkanten 20 bzw. 21 erstreckenden Rändern zwischen sich und den Außenkanten 20, 21 die Lenker 3, 4, mit deren Enden der Kraftaufnehmer 2 bzw. das feststehende Teil 5 jeweils durch elastische Biegestellen 22 zusammenhängt. An diesen Biegestellen 22 ist die Materialstärke gegenüber der Materialstärke der Lenker 3, 4 in der Ebene der Parallelogrammführung gesehen durch kurvenförmige Auskehlungen derart herabgesetzt, daß die gewünschten Elastizitätseigenschaften erhalten werden.

Der materialfreie Bereich 18 begrenzt an seinem dem Lenker 3 abgewandten Rand einen das querelastische Teil 11 bildenden Materialbereich, der mit dem feststehenden Teil 5 an einer die gewünschte Querelastizität liefernden Biegestelle 23 zusammenhängt. Der sich im wesentlichen in der Richtung des Lenkers 4 erstreckende materialfreie Bereich 19 weist angrenzend an den Kraftaufnehmer 2 eine sich etwa bis zur Mitte des Abstandes zwischen den Außenkanten 20, 21 senkrecht zur Richtung der Lenker 3, 4 erstreckende Fortsetzung auf und begrenzt mit seinem dem Kraftaufnehmer 2 und dem Lenker 4 abgewandten inneren Rand den Hebel 6. Zwischen den den materialfreien Bereichen 18, 19 abgewandten Rändern des querelastischen Teils 11 bzw. des Hebels 6 erstreckt sich ein mit dem materialfreien Bereich 19 über einen sich längs dem feststehenden Teil 5 erstreckenden materialfreien Bereich 24 zusammenhängender materialfreier Bereich 25. Zwischen dem dem feststehenden Teil 5 abgewandten Ende des materialfreien Bereichs 25 und einem sich von dem materialfreien Bereich 18 aus längs des Kraftaufnehmers 2 erstreckenden materialfreien Bereich 26 ist die Zugkoppel 10 begrenzt, so daß sie einerseits mit einer dünnen Biegestelle 27 mit dem zum Kraftaufnehmer 2 weisenden Ende des querelastischen Teils 11 und andererseits mit einer dünnen Biegestelle 28 mit dem Hebel 6 zusammenhängt. Gleichzeitig begrenzt der materialfreie Bereich 26 mit seinem zum Kraftaufnehmer 2 weisenden Rand eine den Hebel 6 an den Kraftaufnehmer 2 ankoppelnde dünne Biegestelle 29 auf ihrer zur Zugkoppel 10 weisenden Seite, während die Biegestelle 29 auf ihrer anderen Seite von der vertikalen Fortsetzung des materialfreien Bereichs 19 begrenzt ist.

In dem feststehenden Teil 5 ist von seiner dem Kraftaufnehmer 2 abgewandten Außenkante her eine etwa rechteckige Ausnehmung 30 ausgebildet, die zur Aufnahme der in Fig. 1 dargestellten Magnetanordnung 13 dient. Zur Verbindung der in Fig. 1 dargestellten Kompensationsspule 12 mit dem Hebel 6 ist ein nicht dargestelltes Verlängersteil vorgesehen, das sich von der Kompensationsspule 12 aus zu dem Hebel 6 in Fig. 2 erstreckt und an dem Hebel 6 beispielsweise durch Verschrauben festgelegt ist.

In dem Ausführungsbeispiel von Fig. 2 werden also die gewünschten Elastizitätseigenschaften durch die lokalisierten Biegestellen 22, 23 gebildet, was für die Schaffung definierter Verhältnisse von Vorteil ist. Es ist jedoch auch denkbar, die Elastizität über die gesamte Länge der Lenker 3, 4 bzw. des querelastischen Teils 11 zu verteilen.

## Patentansprüche

1. Kraftmeßvorrichtung, insbesondere Waage, mit einem relativ zu einem feststehenden Teil (5) in der Richtung der zu messenden Kraft elastisch auslenkbar geführten Kraftaufnehmer (2) und mit einer magnetischen Kompensationseinrichtung, die eine Magnetanordnung (12), eine in dem von der Magnetanordnung erzeugten Magnetfeld angeordnete Kompensationsspule (12), einen relativ zu dem feststehenden Teil elastisch gelagerten starren Hebel (6), durch dessen einen Hebelarm (7) die Kompensationsspule (12) abgestützt ist, einen eine vorgegebene Relativlage des Hebels in der Kraftmeßvorrichtung überwachenden Lagegeber (16) und eine den Kompensationsstrom durch die Kompensationsspule in Abhängigkeit von dem Ausgangssignal des Lagegebers auf eine Einhaltung der vorgegebenen Relativlage einstellende und aus dem eingestellten Kompensationsstrom einen Meßwert für die zu messende Kraft bildende elektrische Einrichtung aufweist, wobei der andere Hebelarm (8) des Hebels (6) an den Kraftaufnehmer (2) mechanisch angekoppelt ist, der elastische Weg der Lagerstelle (9) des Hebels (6) sich in der Auslenkrichtung des Kraftaufnehmers (2) erstreckt, und der Lagegeber (16) die Relativlage zwischen der Magnetanordnung (13) und der Kompensationsspule (12) überwacht.

2. Kraftmeßvorrichtung nach Anspruch 1, dadurch gekennzeichnet, daß das Übersetzungsverhältnis zwischen dem die Kompensationsspule (12) abstützenden Hebelarm (7) und dem an den Lastaufnehmer (2) angekoppelten Hebelarm (8) größer als 1 ist.

3. Kraftmeßvorrichtung nach Anspruch 1 oder 2, dadurch gekennzeichnet, daß das Verhältnis zwischen der elastischen Kraft der Führung des Kraftaufnehmers (2) und der elastischen Kraft der Abstützung der Lagerstelle (9) des Hebels (6) groß gegen 1 ist.

4. Kraftmeßvorrichtung nach einem der Ansprüche 1 bis 3, **dadurch gekennzeichnet**, daß der Hebel (6) zweiseitig ausgebildet ist und an seinem einen Ende die Kompensationsspule (12) trägt sowie an seinem anderen Ende an dem Kraftaufnehmer (2) angelenkt ist.

5. Kraftmeßvorrichtung nach einem der Ansprüche 1 bis 4, **dadurch gekennzeichnet**, daß der Kraftaufnehmer (2) mit dem feststehenden Teil (5) durch querelastische Lenker (3, 4) in der Form einer Parallelogrammführung verbunden ist, in der sich die Lenker (3, 4) längs zwei gegenüberliegenden Parallelogrammseiten und der Kraftaufnehmer (2) bzw. das feststehende Teil (5) längs der zwei anderen gegenüberliegenden Parallelogrammseiten erstrecken, und daß der Hebel (6) an einem sich in seiner Längsrichtung von dem feststehenden Teil (5) aus zwischen den die beiden Parallelogrammseiten bildenden Lenkern (3, 4) erstreckenden querelastischen Teil (11) abgestützt ist.

6. Kraftmeßvorrichtung nach Anspruch 5, **dadurch gekennzeichnet**, daß die Elastizität der Lenker (3, 4) auf ihre an die Parallelogrammecken angrenzenden Bereiche (22) und die Elastizität des querelastischen Teils (11) auf seinen an das feststehende Teil (5) angrenzenden Bereich (23) lokalisiert ist.

7. Kraftmeßvorrichtung nach Anspruch 6, **dadurch gekennzeichnet**, daß der Kraftaufnehmer (2),das feststehende Teil (5), die Lenker (3, 4), der Hebel (6) und das querelastische Teil (11) von Materialbereichen eines einstückigen Materialblocks (17) gebildet sind, die durch von Ausnehmungen des Materialblocks (17) gebildete materialfreie Bereiche voneinander getrennt sind und nur an lokalisierten Materialbereichen (22, 23, 27, 28, 29) des Materialblocks miteinander zusammenhängen.

## Claims

1. Force-measuring device, in particular a balance, having a force pickup (2), which is guided so as to be elastically deflectable relative to a stationary part (5) in the direction of the force to be measured, and having a magnetic compensating device which comprises a magnet arrangement (13), a compensating coil (12) disposed in the magnetic field generated by the magnet arrangement, a rigid lever (6) elastically supported relative to the stationary part and by means of whose one lever arm (7) the compensating coil (12) is supported, a position sensor (16) monitoring a preselected relative position of the lever in the force-measuring device, and an electrical device which adjusts the compensating current through the compensating coil in dependence upon the output signal of the position sensor towards compliance with the preselected relative position and forms from the adjusted compensating current a measured value for the force to be measured, wherein the other lever arm (8) of the lever (6) is mechanically coupled to the force pickup (2), the elastic displacement of the bearing point (9) of the lever (6) extends in the direction of deflection of the force pickup (2), and the position sensor (16) monitors the relative position between the magnet arrangement (13) and the compensating coil (12).

2. Force-measuring device according to claim 1, characterized in that the transmission ratio between the lever arm (7) supporting the compensating coil (12) and the lever arm (8) coupled to the load pickup (2) is greater than 1.

3. Force-measuring device according to claim 1 or 2, characterized in that the ratio between the elastic force of the guide of the force pickup (2) and the elastic force of the support of the bearing point (9) of the lever (6) is great compared to 1.

4. Force-measuring device according to one of claims 1 to 3, characterized in that the lever (6) is of a two-sided construction and at its one end carries the compensating coil (12) and at its other end is coupled to the force pickup (2).

5. Force-measuring device according to one of claims 1 to 4, characterized in that the force pickup (2) is connected to the stationary part (5) by transversely elastic connecting rods (3, 4) in the form of a parallelogram guide, in which the connecting rods (3, 4) extend along two opposite parallelogram sides and the force pickup (2) and the stationary part (5) extend along the other two opposite parallelogram sides, and that the lever (6) is supported on a transversely elastic part (11) which extends in its longitudinal direction out from the stationary part (5) and between the connecting rods (3, 4) forming the two parallelogram sides.

6. Force-measuring device according to claim 5, characterized in that the elasticity of the connecting rods (3, 4) is localized to their regions (22) adjoining the corners of the parallelogram and the elasticity of the transversely elastic part (11) is localized to its region (23) adjoining the stationary part (5).

7. Force-measuring device according to claim 6, characterized in that the force pickup (2), the stationary part (5), the connecting rods (3, 4), the lever (6) and the transversely elastic part (11) are formed by material regions of an integral material block (17), which are separated from one another by material-free regions formed by recesses of the material block (17) and are connected to one another only at localized material regions (22, 23, 27, 28, 29) of the material block.

## Revendications

1. Dispositif de mesure de force, en particulier balance, comprenant un récepteur de force (2) guidé de manière à pouvoir se déplacer élastiquement par rapport à une partie fixe (5) dans la direction de la force à mesurer, et un dispositif de compensation magnétique qui comporte un agencement d'aimant (13), une bobine de compensation (12) disposée dans le champ magnétique produit par l'agencement d'aimant, un levier rigide (6) monté élastiquement par rapport à la partie fixe, levier par un bras (7) duquel la bobine de compensation (12) est supportée, un capteur de position (16) contrôlant une position relative prédéterminée du levier dans le dispositif de mesure de force, et un dispositif électrique réglant le courant de compensation traversant la bobine de compensation en fonction du signal de sortie du capteur de position pour le respect de la position relative prédéterminée et établissant à partir du courant de compensation réglé une valeur de mesure pour la force à mesurer, dispositif dans lequel l'autre bras de levier (8) du levier (6) est couplé mécaniquement au récepteur de force (2), la course élastique du point d'appui (9) du levier (6) s'étend dans la direction de déplacement du récepteur de force (2), et le capteur de position (16) contrôle la position relative entre l'agencement d'aimant (13) et la bobine de compensation (12).

2. Dispositif de mesure de force selon la revendication 1, caractérisé par le fait que le rapport de transmission entre le bras de levier (7) supportant la bobine de compensation (12) et le bras de levier (8) couplé au récepteur de force (2) est supérieur à 1.

3. Dispositif de mesure de force selon la revendication 1 ou 2, caractérisé par le fait que le rapport entre la force élastique du guidage du récepteur de force (2) et la force élastique du support du point d'appui (9) du levier (6) a une valeur qui est grande en comparaison de 1.

4. Dispositif de mesure de force selon l'une des revendications 1 à 3, caractérisé par le fait que le levier (6) est agencé sous forme bilatérale et porte à l'une de ses extrémités la bobine de compensation (12) et est articulé à son autre extrémité au récepteur de force (2).

5. Dispositif de mesure de force selon l'une des revendications 1 à 4, caractérisé par le fait que le récepteur de force (2) est relié à la partie fixe (5) par des bras (3, 4) élastiques transversalement sous la forme d'un guidage à parallélogramme, dans lequel les bras (3, 4) s'étendent le long de deux côtés de parallélogramme opposés et le récepteur de force (2) et la partie fixe (5) s'étendent le long des deux autres côtés opposés du parallélogramme, et par le fait que le levier (6) est porté par une partie (11) élastique transversalement s'étendant dans sa direction longitudinale depuis la partie fixe (5), entre les bras (3,4) constituant les deux côtés du parallélogramme.

6. Dispositif de mesure de force selon la revendication 5, caractérisé par le fait que l'élasticité des bras (3, 4) est localisée sur leurs zones (22) adjacentes aux sommets du parallélogramme et que l'élasticité de la partie (11), élastique transversalement, est localisée dans sa zone (23) adjacente à la partie fixe (5).

7. Dispositif de mesure de force selon la revendication 6, caractérisé par le fait que le récepteur de force (2), la partie fixe (5), les bras (3, 4), le levier (6) et la partie (11) élastique transversalement sont constitués par des zones de matière d'un bloc de matière (17) d'une seule pièce, lesquelles zones sont séparées l'une de l'autre par des zones dépourvues de matière constituées par des évidements du bloc de matière (17) et sont reliées l'une à l'autre seulement en des zones de matière localisées (22, 23, 27, 28, 29) du bloc de matière.
